# EUROPÄISCHE PATENTSCHRIFT

(11) **EP 2 988 035 B1**
(45) Veröffentlichungstag und Bekanntmachung des Hinweises auf die Patenterteilung: **07.06.2017**
(21) Anmeldenummer: 15179808.9
(22) Anmeldetag: 05.08.2015
(51) Int. Cl.: F16J 15/3212

(54) **DICHTRING UND DESSEN VERWENDUNG**
SEAL RING AND ITS USE
JOINT D'ETANCHEITE ET SON UTILISATION

(30) Priorität: 22.08.2014 DE 102014012290
(43) Veröffentlichungstag der Anmeldung: 24.02.2016
(73) Patentinhaber: Carl Freudenberg KG, 69469 Weinheim (DE)
(72) Erfinder: Müller-Niehuus, Dr. Kristian, 60438 Frankfurt (DE); Günther, Hans-Werner, 31623 Drakenburg (DE)

(56) Entgegenhaltungen:
- DE-C1- 3 612 330
- GB-A- 668 365
- US-A- 2 760 802

## Beschreibung

### Technisches Gebiet

Die Erfindung betrifft einen Dichtring, umfassend eine dynamisch beanspruchte Dichtlippe mit einer Dichtkante und einem Spannelement zur Stabilisierung der Dichtlippe in radialer Richtung, wobei das Spannelement in einer Einbaunut angeordnet ist, wobei die Einbaunut auf der der Dichtkante radial abgewandten Seite in der Dichtlippe angeordnet ist und auf der der Dichtkante radial abgewandten Seite eine Einbauöffnung aufweist, die von zwei in axialer Richtung mit Abstand benachbart zueinander angeordneten Führungsstegen begrenzt ist, wobei die Dichtlippe auf ihrer der Dichtkante axial abgewandten Seite durch ein Gelenk gelenkig mit einem Stützkörper verbunden ist und wobei die Dichtlippe und der Stützkörper mit ihren einander radial zugewandten Seiten einen in axialer Richtung einseitig offenen, im Wesentlichen C-förmigen Gelenkraum begrenzen, wobei der dem Gelenk axial zugewandte erste Führungssteg einen ersten Durchmesser aufweist, wobei der dem Gelenk axial abgewandte zweite Führungssteg einen zweiten Durchmesser aufweist und wobei der erste Durchmesser größer als der zweite Durchmesser ist.

### Stand der Technik

Ein solcher Dichtring ist aus der US 2,760,802 bekannt. Der vorbekannte Dichtring ist als Radialwellendichtring zur Abdichtung von Öl ausgebildet.
Die Aufgabe, die durch den vorbekannten Dichtring gelöst werden soll wird darin gesehen, dass das als Ringwendelfeder ausgebildete Spannelement stets sicher in der Einbaunut gehalten ist.
Dazu ist es vorgesehen, dass die Einbaunut für das Spannelement in axialer Richtung offen ist. Radial außenseitig wird das Spannelement von einem Axialvorsprung, der einstückig und materialeinheitlich mit der Dichtkante ausgebildet ist, in axialer Richtung vollständig überdeckt.
Die dem Stützkörper des vorbekannten Dichtrings radial zugewandte Oberfläche der Dichtlippe erstreckt sich, ausgehend vom Gelenk, waagerecht, also parallel zur Symmetrieachse des Dichtrings axial in Richtung des ersten Führungsstegs. Abzudichtendes Medium, das zäher als Öl ist, würde während der bestimmungsgemäßen Verwendung des vorbekannten Dichtrings auf der sich waagerecht erstreckenden Oberfläche verharren und könnte die Gebrauchseigenschaften des Dichtrings dadurch nachteilig beeinflussen.

Ein weiterer Dichtring ist allgemein bekannt und gelangt als Radialwellendichtring zur Anwendung. Eine vorbekannte Dichtungsanordnung umfasst einen solchen Dichtring, dessen Dichtkante eine abzudichtende Oberfläche eines abzudichtenden ersten Maschinenelements, zum Beispiel einer Welle, dichtend umschließt. Mit seinem Stützkörper ist der Dichtring in einem zweiten Maschinenelement, zum Beispiel in einer Nut eines Gehäuses angeordnet, wobei das Gehäuse die Welle mit radialem Abstand umschließt. Das durch den Dichtring abzudichtende Medium ist häufig ein Öl. Vorbekannte Radialwellendichtringe gelangen zum Beispiel zur Abdichtung von Getriebewellen zur Anwendung, die Getriebegehäuse durchdringen. Das abzudichtende Medium ist in einem solchen Fall dann ein Getriebeöl.
Die Dichtlippe und ihre Dichtkante bestehen bei den vorbekannten Radialwellendichtringen häufig aus einem elastomeren Werkstoff. Die zuvor beschriebene Dichtungsanordnung ist für eine tribologische Paarung "Elastomer - Öl - abzudichtende Oberfläche aus Metall" optimiert.
Die Führungsstege, die die Einbauöffnung des Spannelements in axialer Richtung beiderseits begrenzen, haben einen im Wesentlichen übereinstimmenden Durchmesser, wobei auch die der abzudichtenden Oberfläche radial abgewandte Oberfläche der Dichtlippe im Wesentlichen nur in axialer Richtung und parallel zur abzudichtenden Oberfläche verläuft.

### Darstellung der Erfindung

Der Erfindung liegt die Aufgabe zu Grunde, einen Dichtring der eingangs genannten Art derart weiterzuentwickeln, dass das abzudichtende Medium durch ein Schmierfett gebildet sein kann und dass der Dichtring auch bei Abdichtung eines solchen Mediums gute Gebrauchseigenschaften während einer langen Gebrauchsdauer aufweist, insbesondere dass die Abdichtung eines solchen Mediums nicht zu einer Verhärtung der Dichtung führt und die Dichtlippe auch bei Abdichtung eines solchen Mediums hohen dynamischen Auslenkbewegungen des abzudichtenden Maschinenelements zu folgen vermag, ohne dass sich die Anpresskräfte, mit denen die Dichtkante das abzudichtende Maschinenelement dichtend berührt, nennenswert verändern.

Eine solche Aufgabe wird erfindungsgemäß durch die Merkmale von Anspruch 1 gelöst. Auf vorteilhafte Ausgestaltungen nehmen die auf Anspruch 1 direkt oder indirekt rückbezogenen Ansprüche bezug.

Zur Lösung der Aufgabe ist es vorgesehen, dass die dem Stützkörper radial zugewandte Oberfläche der Dichtlippe, ausgehend vom Gelenk, axial in Richtung des ersten Führungsstegs in ihrem Durchmesser stetig verkleinert ist, dass der Stützkörper von einer sich durch den ersten Führungssteg erstreckenden, gedachten Radialebene durchdrungen ist und dass der Gelenkraum, senkrecht zur Radialebene betrachtet, in radialer Richtung im Wesentlichen symmetrisch ausgebildet ist.
Hierbei ist von Vorteil, dass die Dichtlippe zumindest im Bereich der Einbauöffnung für das Spannelement schräg zur axialen Erstreckung der abzudichtenden Oberfläche des abzudichtenden Maschinenelements derart verläuft, dass der im Wesentlichen C-förmig ausgebildete Gelenkraum auf der dem Gelenk axial abgewandten Seite in seiner radialen Weite vergrößert ist. Bevorzugt ist die radiale Weite des Gelenkraums, axial ausgehend vom Gelenk in Richtung der stirnseitigen Öffnung des Gelenkraums, stetig erweitert. Durch das vergleichsweise große Volumen des Gelenkraums sammelt sich dort nicht so viel abzudichtendes Medium an, dass dieses zu einer Verhärtung der Dichtung führen könnte. Bereits die beiden unterschiedlich großen Durchmesser der beiden Führungsstege sorgen dafür, dass der Gelenkraum axial in Richtung seiner offenen Stirnseite in radialer Richtung stetig erweitert ist. Selbst im Vergleich zu Öl wesentlich zäheres Schmierfett kann sich während der bestimmungsgemäßen Verwendung des Dichtrings deshalb innerhalb des Gelenkraums nicht halten, so dass die Dichtlippe auch problemlos hohen dynamischen Auslenkbewegungen des abzudichtenden Maschinenelements, beispielsweise einer Welle, zu folgen vermag, bei praktisch gleichbleibendem Pressungsverlauf der Dichtkante auf der abzudichtenden Oberfläche.

Die dem Stützkörper radial zugewandte Oberfläche der Dichtlippe ist, ausgehend vom Gelenk, axial in Richtung des ersten Führungsstegs in ihrem Durchmesser stetig verkleinert. Selbst wenn sich kurzzeitig abzudichtendes Schmierfett innerhalb des Gelenkraums sammelt, fließt dieses durch die zuvor beschriebene Ausgestaltung immer wieder in Richtung des abzudichtenden Raums aus dem Gelenkraum ab, so dass die elastische Nachgiebigkeit der Dichtlippe in radialer Richtung nicht durch im Gelenkraum befindliches, abzudichtendes Medium beeinträchtigt ist und die Dichtlippe deshalb hohen dynamischen Auslenkbewegungen des abzudichtenden Maschinenelements folgen kann. Die Auslenkbewegungen des abzudichtenden Maschinenelements können durchaus im Bereich von ± 5 mm liegen.

Der Pressungsverlauf, mit dem die Dichtkante die abzudichtende Oberfläche umschließt, ist dabei praktisch stets gleichbleibend.

Der Stützkörper ist von einer sich durch den ersten Führungssteg erstreckenden, gedachten Radialebene durchdrungen, wobei der Gelenkraum senkrecht zur Radialebene betrachtet, in radialer Richtung im Wesentlichen symmetrisch ausgebildet ist. Ein unkoordiniertes Abtropfen des abzudichtenden Mediums wird durch die symmetrische Gestalt des Gelenkraums verhindert. Abzudichtendes Medium, das vom abzudichtenden Maschinenelement radial nach außen geschleudert wird und sich an der der Dichtlippe radial zugewandten Oberfläche des Stützkörpers anlagert, bewegt sich durch das Gefälle dieser Oberfläche zunächst in Richtung Gelenk und dann vom Gelenk durch das im Wesentlichen entsprechende Gefälle entlang der Außenumfangsfläche der Dichtlippe am Spannelement vorbei, zurück in Richtung des abzudichtenden Raums.

Der Stützkörper kann bedarfsweise eine seine Form stabilisierende Armierung aufweisen, die zum Beispiel aus einem Gewebe besteht.

Gute Gebrauchseigenschaften des Dichtrings während einer langen Gebrauchsdauer, insbesondere die Vermeidung einer Ansammlung von Schmierfett im Gelenkraum des Dichtrings, lassen sich erreichen, wenn der erste Führungssteg und der zweite Führungssteg, im Schnitt des Dichtrings betrachtet, jeweils außenumfangsseitig durch eine schräg verlaufende, gedachte Verbindungsebene verbunden sind, wobei die Verbindungsebene mit einer Symmetrieachse des Dichtrings einen Winkel einschließt, der 30 bis 60° beträgt. Die Symmetrieachse des Dichtrings erstreckt sich in der gleichen axialen Richtung, wie die abzudichtende Oberfläche eines abzudichtenden Maschinenelements, zum Beispiel einer Welle.
Die genannten Winkel führen einerseits dazu, dass die Dichtlippe eine ausreichend große Ausdehnung in axialer Richtung aufweist, um das Spannelement unterbringen zu können und andererseits dazu, dass die dem abzudichtenden Maschinenelement radial abgewandte Oberseite der Dichtlippe ein ausreichend großes Gefällte aufweist, so dass selbst abzudichtendes zähes Schmierfett aus dem Gelenkraum in Richtung des abzudichtenden Raums abfließen kann.

Um sicherzustellen, dass auch abzudichtendes Medium mit großer Viskosität, zum Beispiel ein Schmierfett, zuverlässig aus dem Gelenkraum abgeführt wird, kann es vorgesehen sein, dass die Dichtlippe und der Stützkörper einander zugewandte Oberflächen aufweisen, die eine reibungsverringernde Oberflächenprofilierung und/oder eine reibungsverringernde Oberflächenbeschichtung aufweisen. Je größer die Viskosität des abzudichtenden Mediums ist, desto wirkungsvoller müssen die Maßnahmen sein, die zu einem Abfließen des abzudichtenden Mediums aus dem Gelenkraum führen. Die Oberflächenprofilierung und/oder die Oberflächenbeschichtung können entweder während der Herstellung und/oder nachträglich auf die genannten Oberflächen aufgebracht werden.

Zum Beispiel können oliophile, oliophobe, hydrophile, hydrophobe Beschichtungen aufgebracht werden, wobei diese Beschichtungen durch Lackieren, Plasmabehandlung oder Aufdampfen aufgebracht werden können. Oliophile Beschichtungen entziehen dem Schmierfett etwas Öl, und das Öl wird an Ort und Stelle gehalten. Dadurch wird ein öliger Film aufgebaut, auf dem das hochviskose Schmierfett entlang gleiten kann.
Durch eine oliophobe Beschichtung ergibt sich ein Effekt, ähnlich dem Lotuseffekt. Die Oberflächenbindungskräfte zwischen Schmierfett und Dichtkante werden herabgesetzt, so dass das Schmierfett reibungsarm an der beschichteten Oberfläche entlang gleiten kann.
Schmierfett enthält herstellungs- und einsatzbedingt immer einen gewissen Anteil an Wasser. Dieses Wasser kann ebenfalls als Substanz zum Aufbau eines Films zur Reibungsreduzierung genutzt werden.
Eine hydrophile Beschichtung entzieht dem Schmierfett etwas Wasser, und das Wasser wird an Ort und Stelle gehalten. Dadurch wird ein wässriger Film aufgebaut, auf dem das hochviskose Schmierfett entlang gleiten kann.
Durch eine hydrophobe Beschichtung ergibt sich ein Effekt, ähnlich dem Lotuseffekt. Die Oberflächenbindungskräfte zwischen Schmierfett und Dichtkante werden herabgesetzt, so dass das Schmierfett reibungsarm an der beschichteten Oberfläche entlang gleiten kann.
Durch lackieren kann die Beschichtung sowohl während als auch nach der Produktion des Dichtrings einfach aufgetragen werden.
Der Vorteil einer Plasmaaktivierung liegt darin, dass durch gezielte Modifizierung der Oberflächenenergie auf der Oberseite des eingesetzten Werkstoffs die zuvor beschriebenen Effekte erzeugt werden können. Ein weiterer Vorteil ist, dass nur der eingesetzte Werkstoff zum Einsatz kommt, so dass keine Beständigkeitsanalysen zwischen Werkstoff, Beschichtung und Schmierfett erforderlich sind.

Aufdampfen hat den Vorteil, dass eine sehr dünne und damit Ressourcen schonende Applikation von Oberflächenbeschichtungsmaterialien erfolgen kann.

Oberflächenstrukturierungen können mechanisch durch Vertiefungen oder Erhebungen erzeugt werden, wobei eine Prägestruktur ein Schuppenmuster, geometrische Muster, Noppen, Rhomben oder Nuten aufweisen kann.
Die zuvor genannten Prägestrukturen haben alle den gemeinsamen Vorteil, dass bei entsprechender Ausrichtung ein Gleiten in nur einer bestimmten Richtung möglich ist. Zum Beispiel ist bei Schuppen entlang der Streichrichtung ein Gleiten vereinfacht, entgegen dem Strich erschwert.
Bei geeigneter Ausgestaltung kann der Oberflächenkontakt reduziert werden. Zum Beispiel bei Noppen oder Rhomben haftet das Schmierfett nur noch auf den Erhebungen, so dass hierdurch die Gleitreibung reduziert wird und das Schmierfett leichter auf der Oberfläche fließen kann.
Des Weiteren kann zum Beispiel durch eine Pfeilstruktur auf der Oberfläche der abfließende Strom von Schmierfett gelenkt/kanalisiert werden.

Für abzudichtende Medien mit besonders großer Viskosität weisen die Oberflächen sowohl eine Oberflächenprofilierung als auch eine Oberflächenbeschichtung auf. Die Ableitung von abzudichtendem Medium aus dem Gelenkraum ist dadurch besonders wirkungsvoll.

Der Gelenkraum kann zwischen den einander zugewandten Oberflächen von Dichtlippe und Stützkörper von einem Schaumstoffkörper im Wesentlichen vollständig ausgefüllt sein. Bei einer solchen Ausgestaltung ist von Vorteil, dass es einer Oberflächenprofilierung und/oder einer Oberflächenbeschichtung der einander zugewandten Oberflächen von Dichtlippe und Stützkörper nicht bedarf, so dass die Herstellung des Dichtrings insgesamt einfach und kostengünstig ist. Der Schaumstoffkörper sorgt dafür, dass abzudichtendes Medium während der Gebrauchsdauer des Dichtrings nicht in den Gelenkraum eindringen kann. Der Schaumstoffkörper weist eine ausreichende Kompressibilität auf, durch die die Gebrauchseigenschaften des Dichtrings, insbesondere die radiale Nachgiebigkeit der Dichtlippe, nicht nachteilig beeinflusst wird.

Der Schaumstoffkörper kann bevorzugt aus einem geschlossenzelligen Schaum bestehen. Dabei ist von Vorteil, dass das abzudichtende Medium nicht in den Schaumstoffkörper eindringen kann. Die Kompressibilität des Schaumstoffkörpers ist dadurch stets gleichbleibend, so dass die elastische Nachgiebigkeit der Dichtlippe in radialer Richtung ebenfalls während einer langen Gebrauchsdauer praktisch konstant ist.

Gemäß einer vorteilhaften Ausgestaltung kann es vorgesehen sein, dass die Dichtkante durch zwei einander durchschneidende Kegelflächen begrenzt ist. Dichtkanten, die durch zwei einander durchschneidende Kegelflächen begrenzt sind, sind allgemein bekannt, wobei die Kegelflächen, in Abhängigkeit vom jeweiligen Anwendungsfall, unterschiedliche Winkel bezogen auf die Symmetrieachse des Dichtrings haben können. Häufig ist es so, dass die axial in Richtung des abzudichtenden Raums angeordnete Kegelfläche mit der Symmetrieachse einen größeren Winkel begrenzt, als die Kegelfläche, die dem abzudichtenden Raum axial abgewandt ist.
Die Dichtkante kann, in Abhängigkeit vom jeweiligen Anwendungsfall, einen Radius aufweisen. Der Vorteil eines Dichtkantenradius liegt darin, dass in einem weiten radialen Auslenkungsbereich des abzudichtenden Maschinenelements das Winkelverhältnis zwischen den Kegelflächen der Dichtkante erhalten bleibt, im Gegensatz zu einer scharfkantig ausgebildeten Dichtkanten, bei der sich die Winkelkonstellation stetig ändert.

Zusätzlich besteht die Möglichkeit, dass die Dichtkante einen Rückförderdrall zur Förderung des abzudichtenden Mediums zurück in den abzudichtenden Raum aufweisen kann.

Das Spannelement kann als Ringwendelfeder ausgebildet sein. Spannelemente gelangen generell dann zur Anwendung, wenn der Druck innerhalb des abzudichtenden Raums nur so gering ist, dass die Dichtlippe in radialer Richtung nicht mit einem ausreichend großen Anpressdruck an die abzudichtende Oberfläche des abzudichtenden Maschinenelements angepresst wird. Um Undichtigkeiten des Dichtrings bei geringem Druck im abzudichtenden Raum durch eine zu geringe Anpressung der Dichtkante auf die abzudichtende Oberfläche auszuschließen, ist das Spannelement vorgesehen, das die Dichtkante radial außenumfangsseitig umschließt. Das Spannelement kann zum Beispiel durch die genannte Ringwendelfeder oder durch andere geeignete Federn gebildet sein, ebenso wie durch ein Seil, eine Schnur, ein Band, ein Profilband oder ein Gewebe.
Eine Ringwendelfeder ist einfach in der Herstellung, hat einen konstanten Anpressungsverlauf und eine konstante Federkraft auch bei großen radialen Auslegungen der Dichtlippe, weil die Ringwendelfeder schwimmend in der Einbaunut angeordnet ist.
Geeignete Federn können zum Beispiel durch Fingerfedern gebildet sein, bei denen die Federkraft durchmesserunabhängig ist, wobei die Fingerfedern als Segmentausführung anwendbar sind.
Canted coil springs haben - im Gegensatz zu Ringwendelfedern - über einen großen Durchmesserbereich fast eine konstante Federkraft, auch bei nichtschwimmender Halterung.
Seil, Schnur, Band, Profilband oder Gewebe gelangen zur Anwendung, wenn eine Anpressungsreduzierung erfolgen soll, falls aufgrund von betriebsbedingtem Materialverschleiß die Dichtkante in ihrem Durchmesser etwas vergrößert ist. Die zuvor genannten Spannelemente haben keine nachstellende Federkraft, wie zum Beispiel eine Ringwendelfeder. Durch die zuvor genannte Anpressungsreduzierung wird der Verschleiß der Dichtkante minimiert.

Der Dichtring kann, mit Ausnahme des Spannelements, einstückig und materialeinheitlich ausgebildet sein. Der Dichtring weist dadurch einen einfachen Aufbau auf und ist kostengünstig herstellbar. Außerdem ist das Recycling des Dichtrings im Anschluss an seine Gebrauchsdauer vereinfacht. Dichtungsmaterialien, die zur Anwendung gelangen können, können Polymere, Elastomere wie zum Beispiel NBR, HNBR, FKM, EPDM oder PTFE, PU sein. NBR ist ein Standardmaterial, das mit unterschiedlichen Spezifikationen kostengünstig verfügbar ist.
HNBR ist beständig gegenüber Umwelteinflüssen, wie zum Beispiel Ozon, und eignet sich zur Herstellung von Komplettdichtungen.
FKM hat eine hohe chemische Beständigkeit und hohe
Temperatureinsatzgrenzen. Dichtkanten aus einem solchen Werkstoff haben besonders vorteilhafte Gebrauchseigenschaften.
EPDM wird für Dichtringe in Sicherheitsbereichen verwendet, welche ein wässriges Schmiermedium vorschreiben. Für Komplettdichtungen ist ein solcher Werkstoff gut geeignet.
PTFE hat eine hohe Verschleißfestigkeit und kann daher besonders gut als Dichtkantenwerkstoff eingesetzt werden.
PU-Werkstoffe eignen sich besonders gut für eine spannabhebende Fertigung. Hierdurch besteht die Möglichkeit, Oberflächenstrukturierungsgeometrien umzusetzen.

Nach einer anderen Ausgestaltung kann es vorgesehen sein, dass der Stützkörper aus einem anderen Material als die Dichtlippe besteht. Ein solcher Zwei-Komponenten-Dichtring hat den Vorteil, dass sowohl der Stützkörper als auch die Dichtlippe getrennt voneinander besonders gut an den jeweiligen Anwendungsfall angepasst werden können.

Außerdem betrifft die Erfindung die Verwendung eines Dichtrings, wie zuvor beschrieben.

Durch die spezielle Ausgestaltung des Gelenkraums, die ein Abfließen auch von abzudichtenden Medien mit großer Viskosität in Richtung eines abzudichtenden Raums ermöglicht, wird ein solcher Dichtring zur Abdichtung von Schmierfett verwendet.

### Kurzbeschreibung der Zeichnung

Zwei Ausführungsbeispiele eines erfindungsgemäßen Dichtrings werden nachfolgend anhand der Figuren näher erläutert. Diese zeigen jeweils ein Ausführungsbeispiel in schematischer Darstellung.
- Figur 1: ein erstes Ausführungsbeispiel, mit herstellungsbedingt leerem Gelenkraum,
- Figur 2: ein zweites Ausführungsbeispiel, ähnlich dem Ausführungsbeispiel aus Figur 1, wobei der Gelenkraum mit einem Schaumstoffkörper im Wesentlichen vollständig ausgefüllt ist.

### Ausführung der Erfindung

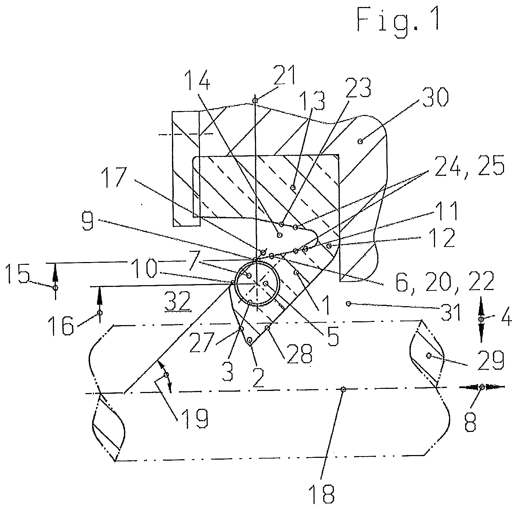

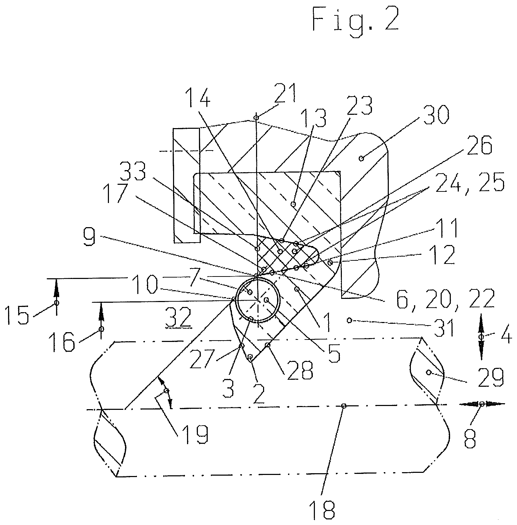

In den Figuren 1 und 2 ist jeweils eine Dichtungsanordnung gezeigt, in der der erfindungsgemäße Dichtring zur Anwendung gelangt. Die Dichtungsanordnung umfasst zwei abzudichtende Maschinenelemente 29, 30, wobei das erste abzudichtende Maschinenelement 29 durch eine Welle gebildet ist und das zweite abzudichtenden Maschinenelement 30 durch ein Gehäuse, das die Welle mit radialem Abstand umschließt. In dem durch den radialen Abstand gebildeten Spalt 31 ist der erfindungsgemäße Dichtring angeordnet, der als Radialwellendichtring ausgebildet ist und als Windkrafthauptlagerabdichtung zur Abdichtung von Schmierfett Verwendung findet.

Der Dichtring umfasst die dynamisch beanspruchte Dichtlippe 1, die eine Dichtkante 2 aufweist, wobei die Dichtkante 2 in den hier gezeigten Ausführungsbeispielen durch zwei einander durchschneidende Kegelflächen 27, 28 begrenzt ist. Radial außenumfangsseitig ist die Dichtkante 2 von dem Spannelement 3 umschlossen, wobei das Spannelement 3 in den gezeigten Ausführungsbeispielen durch eine Ringwendelfeder gebildet ist. Das Spannelement 3 ist in der Einbaunut 5 angeordnet, die auf der der Dichtkante 2 radial abgewandten Seite 6 der Dichtlippe 1 angeordnet ist. Die Einbaunut 5 hat eine Einbauöffnung 7 für das Spannelement 3. Die Einbauöffnung 7 ist in axialer Richtung 8 von zwei mit axialem Abstand benachbart zueinander angeordneten Führungsstegen 9, 10 begrenzt, die voneinander abweichende Durchmesser 15, 16 aufweisen.

Die Dichtlippe 1 ist durch das Gelenk 12 gelenkig, insbesondere in radialer Richtung 4 elastisch nachgiebig, mit dem Stützkörper 13 verbunden. Der Gelenkraum 14, der durch das Gelenk 12 und die einander zugewandten Oberflächen 22, 23 von Dichtlippe 1 und Stützkörper 13 begrenzt ist, ist im Wesentlichen C-förmig ausgebildet und auf der dem Gelenk 12 axial abgewandten Seite einseitig offen.

Der dem Gelenk 12 axial zugewandte erste Führungssteg 9 hat einen ersten Durchmesser 15, der größer ist als der zweite Durchmesser 16 des zweiten Führungsstegs 10, der auf der dem Gelenk 12 axial abgewandten Seite der Dichtlippe 1 angeordnet ist.
Die gedachte Verbindungsebene 17, die den Außenumfang der beiden Führungsstege 9, 10 miteinander verbindet, schließt mit der Symmetrieachse 18 des Dichtrings den Winkel 19 ein, der in dem hier gezeigten Ausführungsbeispiel 30 bis 60° beträgt.

Ausgehend vom Gelenk 12 erstreckt sich die Oberfläche 22 der Dichtlippe 1 zunächst mit etwa 20° in Richtung des abzudichtenden Raums 32, bis zum Spannelement 3. Anschließend erstreckt sich die gedachte Verbindungsebene 17 mit relativ größerem Winkel 19 von etwa 45° zur Symmetrieachse 18.

Die radiale Weite des Gelenkraums 14 ist, ausgehend vom Gelenk 12, axial in Richtung des abzudichtenden Raums 32 stetig vergrößert. Auch abzudichtende Medien mit großer Viskosität können sich nicht innerhalb des offenen Gelenkraums 14 halten und werden stets in Richtung des abzudichtenden Raums 32 aus diesem abgeführt. Während der bestimmungsgemäßen Verwendung des Dichtrings ist der Gelenkraum 14 deshalb praktisch stets frei von abzudichtendem Medium, wie in Figur 1 dargestellt.

In Figur 2 unterscheidet sich der Dichtring vom Dichtring aus Figur 1 nur dadurch, dass der Gelenkraum 14 von einem geschlossenzelligen Schaumstoffkörper 26 im Wesentlichen vollständig ausgefüllt ist.

Der Gelenkraum 14 ist, ausgehend von der offenen Stirnseite 33 des Schaumstoffkörpers 26, entlang der Verbindungsebene 17 axial in Richtung des abzudichtenden Raums 32 stetig in seiner radialen Ausdehnung erweitert.

Die beiden Maschinenelemente 29, 30 sind in den Figuren 1 und 2 jeweils mit strich-zwei-punktierten Linien gezeigt.
Der erfindungsgemäße Dichtring ist in den Figuren 1 und 2 jeweils in seiner herstellungsbedingten Form dargestellt.

## Patentansprüche

1. Dichtring, umfassend eine dynamisch beanspruchte Dichtlippe (1) mit einer Dichtkante (2) und einem Spannelement (3) zur Stabilisierung der Dichtlippe (1) in radialer Richtung (4), wobei das Spannelement (3) in einer Einbaunut (5) angeordnet ist, wobei die Einbaunut (5) auf der der Dichtkante (2) radial abgewandten Seite (6) in der Dichtlippe (1) angeordnet ist und auf der der Dichtkante (2) radial abgewandten Seite (6) eine Einbauöffnung (7) aufweist, die von zwei in axialer Richtung (8) mit Abstand benachbart zueinander angeordneten Führungsstegen (9, 10) begrenzt ist, wobei die Dichtlippe (1) auf ihrer der Dichtkante (2) axial abgewandten Seite (11) durch ein Gelenk (12) gelenkig mit einem Stützkörper (13) verbunden ist und wobei die Dichtlippe (1) und der Stützkörper (13) mit ihren einander radial zugewandten Seiten einen in axialer Richtung (8) einseitig offenen, im Wesentlichen C-förmigen Gelenkraum (14) begrenzen, wobei der dem Gelenk (12) axial zugewandte erste Führungssteg (9) einen ersten Durchmesser (15) aufweist, wobei der dem Gelenk (12) axial abgewandte zweite Führungssteg (10) einen zweiten Durchmesser (16) aufweist und wobei der erste Durchmesser (15) größer als der zweite Durchmesser (16) ist, **dadurch gekennzeichnet, dass** die dem Stützkörper (13) radial zugewandte Oberfläche (20) der Dichtlippe (1), ausgehend vom Gelenk (12), axial in Richtung des ersten Führungsstegs (9) in ihrem Durchmesser stetig verkleinert ist, dass der Stützkörper (13) von einer sich durch den ersten Führungssteg (9) erstreckenden, gedachten Radialebene (21) durchdrungen ist und dass der Gelenkraum (14), senkrecht zur Radialebene (21) betrachtet, in radialer Richtung (4) symmetrisch ausgebildet ist.

2. Dichtring nach Anspruch 1, **dadurch gekennzeichnet, dass** der erste Führungssteg (9) und der zweite Führungssteg (10), im Schnitt des Dichtrings betrachtet, jeweils außenumfangsseitig durch eine schräg verlaufende, gedachte Verbindungsebene (17) verbunden sind, und dass die Verbindungsebene (17) mit einer Symmetrieachse (18) des Dichtrings einen Winkel (19) einschließt, der 30° bis 60° beträgt.

3. Dichtring nach einem der Ansprüche 1 oder 2, **dadurch gekennzeichnet, dass** die Dichtlippe (1) und der Stützkörper (13) einander radial zugewandte Oberflächen (22, 23) aufweisen und dass die Oberflächen (22, 23) eine reibungsverringernde Oberflächenprofilierung (24) und/oder eine reibungsverringernde Oberflächenbeschichtung (25) aufweisen.

4. Dichtring nach einem der Ansprüche 1 oder 2, **dadurch gekennzeichnet, dass** der Gelenkraum (14) zwischen den einander zugewandten Oberflächen (22, 23) von Dichtlippe (1) und Stützkörper (13) von einem Schaumstoffkörper (26) im Wesentlichen vollständig ausgefüllt ist.

5. Dichtring nach Anspruch 4, **dadurch gekennzeichnet, dass** der Schaumstoffkörper (26) aus einem geschlossenzelligen Schaum besteht.

6. Dichtring nach einem der Ansprüche 1 bis 5, **dadurch gekennzeichnet, dass** die Dichtkante (2) durch zwei einander durchschneidende Kegelflächen (27, 28) begrenzt ist.

7. Dichtring nach einem der Ansprüche 1 bis 6, **dadurch gekennzeichnet, dass** das Spannelement (3) als Ringwendelfeder ausgebildet ist.

8. Dichtring nach einem der Ansprüche 1 bis 7, **dadurch gekennzeichnet, dass** der Dichtring, mit Ausnahme des Spannelements (3), einstückig und materialeinheitlich ausgebildet ist.

9. Dichtring nach einem der Ansprüche 1 bis 8, **dadurch gekennzeichnet, dass** der Dichtring mit Ausnahme des Spannelements (3) aus einem elastomeren Werkstoff besteht und dass der Stützkörper (13) eine Gewebearmierung aufweist.

10. Verwendung eines Dichtrings nach einem der Ansprüche 1 bis 9 zur Abdichtung von Schmierfett.

## Claims

1. Sealing ring, comprising a dynamically stressed lip seal (1) halving a sealing edge (2) and a tensioning element (3) for stabilising the lip seal (1) in the radial direction (4), wherein the tensioning element (3) is disposed in an installation groove (5), wherein the installation groove (5) is disposed in the lip seal (1) on that side (6) that radially faces away from the sealing edge (2) and on that side (6) that radially faces away from the sealing edge (2) displays an installation opening (7) which is delimited by two guide webs (9, 10) which are disposed in an adjacent manner at a spacing from one another in the axial direction (8), wherein the lip seal (1) on its side (11) which axially faces away from the sealing edge (2) is connected in an articulated manner by an articulation (12) to a support body (13), and wherein the lip seal (1) and the support body (13) with their sides which radially face towards one another delimit a substantially C-shaped articulation space (14) which on one side is open in the axial direction (8), wherein the first guide web (9) which axially faces towards the articulation (12) displays a first diameter (15), wherein the second guide web (10) which axially faces away from the articulation (12) displays a second diameter (16), and wherein the first diameter (15) is larger than the second diameter (16), **characterized in that**, proceeding from the articulation (12), that surface (20) of the lip seal (1) that radially faces towards the support body (13) is continuously decreased in its diameter in the axial direction of the first guide web (9), that the support body (13) is penetrated by an imaginary radial plane (21) which extends through the first guide web (9), and **in that** the articulation space (14), when viewed perpendicularly to the radial plane (21), in the radial direction (4) is configured in a symmetrical manner.

2. Sealing ring according to Claim 1, **characterized in that** the first guide web (9) and the second guide web (10), when viewed in the section of the sealing ring, are in each case connected on the side of the outer circumference by an obliquely running imaginary connecting plane (17), and **in that** the connecting plane (17) encloses an angle (19) of 30° to 60° in relation to an axis of symmetry (18) of the sealing ring.

3. Sealing ring according to one of Claims 1 and 2, **characterized in that** the lip seal (1) and the support body (13) display surfaces (22, 23) which radially face towards one another, and **in that** the surfaces (22, 23) display a friction-reducing surface pattern (24) and/or a friction-reducing surface coating (25).

4. Sealing ring according to one of Claims 1 and 2, **characterized in that** the articulation space (14) between those surfaces (22, 23) of the lip seal (1) and the support body (13) that face towards one another is substantially completely filled by a foam-material body (26).

5. Sealing ring according to Claim 4, **characterized in that** the foam-material body (26) is composed of a closed-cell foam.

6. Sealing ring according to one of Claims 1 to 5, **characterized in that** the sealing edge (2) is delimited by two tapered surfaces (27, 28) which intersect one another.

7. Sealing ring according to one of Claims 1 to 6, **characterized in that** the tensioning element (3) is configured as an annular helical spring.

8. Sealing ring according to one of Claims 1 to 7, **characterized in that** the sealing ring, with the exception of the tensioning element (3), is configured so as to be in one part and in a materially integral manner.

9. Sealing ring according to one of Claims 1 to 8, **characterized in that** the sealing ring, with the exception of the tensioning element (3), is composed of an elastomeric material, and **in that** the support body (13) displays a woven-fabric reinforcement.

10. Use of a sealing ring according to one of Claims 1 to 9, for sealing lubrication grease.

## Revendications

1. Bague d'étanchéité, comprenant une lèvre d'étanchéité (1) sollicitée dynamiquement, avec une arête d'étanchéité (2) et un élément de serrage (3) pour stabiliser la lèvre d'étanchéité (1) dans la direction radiale (4), l'élément de serrage (3) étant disposé dans une rainure d'installation (5), la rainure d'installation (5) étant disposée du côté (6) radialement opposé à l'arête d'étanchéité (2) dans la lèvre d'étanchéité (1) et présentant, sur le côté (6) radialement opposé à l'arête d'étanchéité (2), une ouverture d'installation (7) qui est limitée par deux nervures de guidage (9, 10) disposées à distance l'une à côté de l'autre dans la direction axiale (8), la lèvre d'étanchéité (1) étant connectée à un corps de support (13) sur son côté (11) axialement opposé à l'arête d'étanchéité (2) de manière articulée par une articulation (12) et la lèvre d'étanchéité (1) et le corps de support (13) limitant avec leurs côtés tournés radialement l'un vers l'autre un espace d'articulation (14) essentiellement en forme de C, ouvert d'un côté dans la direction axiale (8), la première nervure de guidage (9) tournée axialement vers l'articulation (12) présentant un premier diamètre (15), la deuxième nervure de guidage (10) opposée axialement à l'articulation (12) présentant un deuxième diamètre (16) et le premier diamètre (15) étant supérieur au deuxième diamètre (16), **caractérisée en ce que** la surface (20) de la lèvre d'étanchéité (1) tournée radialement vers le corps de support (13), partant de l'articulation (12), a un diamètre qui diminue progressivement axialement dans la direction de la première nervure de guidage (9), **en ce que** le corps de support (13) est traversé par un plan radial imaginaire (21) s'étendant à travers la première nervure de guidage (9) et **en ce que** l'espace d'articulation (14), considéré perpendiculairement au plan radial (21), est réalisé symétriquement dans la direction radiale (4).

2. Bague d'étanchéité selon la revendication 1, **caractérisée en ce que** la première nervure de guidage (9) et la deuxième nervure de guidage (10), considérées en coupe à travers la bague d'étanchéité, sont à chaque fois raccordées du côté de la périphérie extérieure par un plan de liaison imaginaire (17) s'étendant obliquement, et **en ce que** le plan de liaison (17) forme avec un axe de symétrie (18) de la bague d'étanchéité un angle (19) compris entre 30° et 60°.

3. Bague d'étanchéité selon l'une quelconque des revendications 1 ou 2, **caractérisée en ce que** la lèvre d'étanchéité (1) et le corps de support (13) présentent des surfaces tournées radialement l'une vers l'autre (22, 23) et **en ce que** les surfaces (22, 23) présentent un profilage de surface (24) réduisant les frictions et/ou un revêtement de surface (25) réduisant les frictions.

4. Bague d'étanchéité selon l'une quelconque des revendications 1 ou 2, **caractérisée en ce que** l'espace d'articulation (14) entre les surfaces (22, 23) tournées l'une vers l'autre de la lèvre d'étanchéité (1) et du corps de support (13) est essentiellement rempli complètement par un corps en mousse (26).

5. Bague d'étanchéité selon la revendication 4, **caractérisée en ce que** le corps en mousse (26) se compose d'une mousse à cellules fermées.

6. Bague d'étanchéité selon l'une quelconque des revendications 1 à 5, **caractérisée en ce que** l'arête d'étanchéité (2) est limitée par deux surfaces coniques (27, 28) s'intersectant.

7. Bague d'étanchéité selon l'une quelconque des revendications 1 à 6, **caractérisée en ce que** l'élément de serrage (3) est réalisé sous forme de ressort en spirale annulaire.

8. Bague d'étanchéité selon l'une quelconque des revendications 1 à 7, **caractérisée en ce que** la bague d'étanchéité, à l'exception de l'élément de serrage (3), est réalisée d'une seule pièce et dans un matériau unitaire.

9. Bague d'étanchéité selon l'une quelconque des revendications 1 à 8, **caractérisée en ce que** la bague d'étanchéité, à l'exception de l'élément de serrage (3), se compose d'un matériau élastomère et **en ce que** le corps de support (13) présente une armature en tissu.

10. Utilisation d'une bague d'étanchéité selon l'une quelconque des revendications 1 à 9 pour l'étanchéité de graisse de lubrification.
